# EUROPEAN PATENT APPLICATION

(11) **EP 0 549 277 A1**
(43) Date of publication of application: **30.06.1993**
(21) Application number: 92311590.1
(22) Date of filing: 18.12.1992
(51) Int. Cl.: B29C 65/54, F16B 11/00, F16B 7/00, B29L 23/22

(54) **Method for glueing lattice structures manufactured of a plastic profile and adhesive bonding joint of lattice structures manufactured of a plastic profile**

(30) Priority: 20.12.1991 FI 916092
(71) Applicant: NESTE OY, FIN-02150 Espoo (FI)
(72) Inventor: Ahopelto, Erkki, 00640 Helsinki (FI); Karna, Toivo, 06400 Porvoo (FI); Niemi, Timo, 40200 Jyvaskyla (FI); Kannosto, Veikko, 39500 Ikaalinen (FI); Saarela, Olli, 02140 Espoo (FI)
(74) Representative: Lamb, John Baxter

(57) **Abstract**

The invention relates to a method of glueing lattice structures manufactured of a plastic profile, in which method the plastic profiles (10,11,12) to be glued to one another are placed in a joint to join at least one plastic profile to at least one hollow plastic profile. Pluglike members (25) are placed in said hollow plastic profile (10,11,12) to confine a joint area so that an insulated space is formed, and said insulated space is filled with adhesive. The invention also relates to an adhesive bonding joint of lattice structures manufactured of a plastic profile, in which the plastic profiles (10,11,12) to be glued to one another have been placed in the joint to join at least one plastic profile to at least one hollow plastic profile. The joint is provided in the form of an insulated space confined by pluglike members (25) placed in said hollow plastic profile (10,11,12). which space has been filled with adhesive.

## Description

The invention relates to a method of glueing lattice structures manufactured of a plastic profile, in which method the plastic profiles to be glued to one another are placed in a joint to join at least one plastic profile to at least one hollow plastic profile.

The invention also relates to an adhesive bonding joint for lattice structures manufactured of a plastic profile, in which the plastic profiles to be glued to one another have been placed in the joint to join at least one plastic profile to at least one hollow plastic profile.

With regard to the prior art reference is made to FR patent 1,175,789, which describes a method of connecting a metal tube to a plastic tube by means of adhesive and forming radial holes in the metal part. However, the problem related to the selection of a suitable thickness of the glue layer could not be solved in this connection.

With regard to the prior art reference is also made e.g. to published EP application 0 306 554, published EP application 2 205 913 and US patent 4,211,259, which disclose constructions for joining parts of profile structures end to end. In these prior art constructions either the parts are placed endways with some overlap and adhesive is applied to the overlapping area or a connection part is used to which the ends of the profiles are attached. However, none of these prior art methods is suitable for use as a method of joining lattice structures.

CH patent 661,109 discloses a construction for a T-joint of tubes in which a T-shaped connection part is used to which the tubes are joined by means of adhesive by an end-on-end joint in such a manner that an end of each tube to be connected is inserted into an arm of a T-piece in an overlapping relationship, and adhesive is applied to the overlapping area. However, a strong and durable joint is not achieved by this prior art construction and, furthermore, the shape of the connection part limits its applications.

The structures manufactured of plastic material, in particular of a composite material, have excellent strength and stiffness properties, as is well known, but the problematic area associated with the structures manufactured of a composite material has been to find such a joint construction by which loads can be transferred in the structure and which does not weaken the structure. If holes are drilled in the structures for connections, the continuous fibres are broken, thereby considerably weakening the properties of the material. It is not possible to weld the composite material, and the threading of profile ends for connections breaks the load-carrying fibres. The only practical method by which the full utilization of the strength of the material is also achieved is to transfer loads by means of a bonded joint. However, providing a sufficiently strong joint has been problematic in the prior art glueing methods because a sufficiently large bond area has not been achieved for the bonded joint. Furthermore, in the prior art adhesive bonding methods it has been difficult to provide a glue layer of suitable thickness. In particular, there has been a risk that a bond surface is not formed over the entire area of the joint, thereby failing to achieve a strong joint. Finding such a glueing method which could also be used on site has also been particularly problematic.

One prior art method of joining lattice structures manufactured of a composite profile is disclosed in EP patent 0 114 501, in which special connection parts are used for joining the profiles to one another. The connection parts used in the construction taught by the reference are complex and thus expensive to manufacture. Moreover, the applications of the connection disclosed in the reference are limited to the configuration determined by the position of the connection parts in relation to one another, and applying the connection on site is therefore problematic.

An object of the invention is to provide a method of glueing lattice structures manufactured of a plastic profile which is devoid of the drawbacks of the prior art methods.

The method of glueing lattice structures manufactured of a plastic profile according to the invention provides a strong joint and the application of the method on site is simple.

For achieving the above-noted objects and those which will come out later, the method of the invention is mainly characterized in that pluglike members are placed in said hollow plastic profile to confine a joint area so that an insulated space is formed, and that said insulated space is filled with adhesive.

The adhesive bonding joint of the invention is mainly characterized in that the joint is provided in the form of an insulated space confined by pluglike members placed in said hollow plastic profile, which space has been filled with adhesive.

It is characteristic of the invention that the hollow profiles manufactured of a plastic material are plugged close to the joint area, whereby an insulated space is formed in the joint area, which space is filled with adhesive by casting or by injecting.

In the method according to the invention one or more plastic profiles can be joined to another hollow plastic profile. It is, however, essential that at least one of the profiles to be joined together is hollow, and that the pluglike members are placed in the hollow profile adjacent to the joint area, thereby providing an insulated space in which the profile/profiles to be joined is/are also placed, and finally the insulated space is filled with adhesive. Thus in the joint according to the invention at least one profile is hollow and provided with at least two pluglike members, and the other profile parts to be joined can be either solid, in which case no pluglike member is needed and the end of the profile may be, for instance, grooved, threaded or perforated to increase the bonding area and to improve the strength of the joint, or hollow and provided with at least one pluglike member.

The adhesive bonding method of the invention can be freely applied to different profile shapes and to different lattice structures.

The most important advantages of the adhesive bonding method of the invention over the prior art glueing methods may be considered to be e.g. that a large bond area and a strong joint are achieved by the adhesive bonding method. Furthermore, it is possible to glue a prefabricated joint on site. Using the method of the invention in assembly enables automation and, in addition, the required quantity of the adhesive and the dispensing of the adhesive can be controlled.

The invention will now be described in more detail with reference to the figures of the accompanying drawing, in which
Fig. 1 presents schematically an application of the invention, and
Fig. 2 presents schematically another application of the invention.

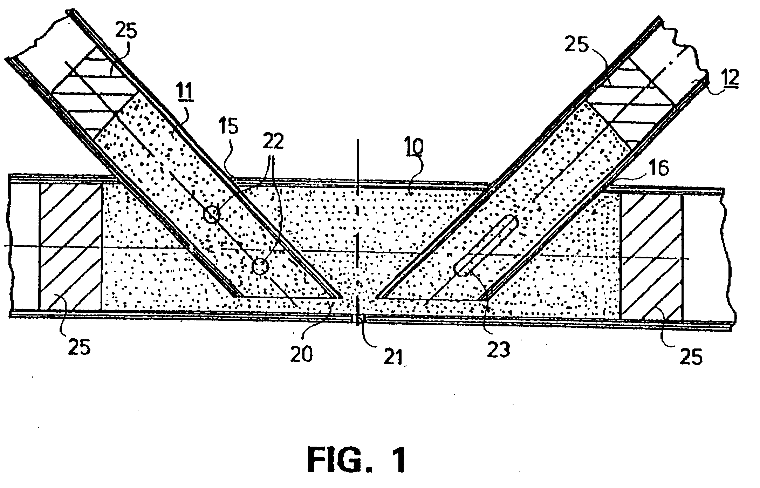

In the embodiment of the invention shown in Fig. 1 a profile part 10 manufactured of a composite material is provided with openings 15,16 for profile parts 11 and 12 which are to be joined and which are manufactured of a composite material. Pluglike members 25 made of flexible foamed plastic and defining a joint area are fitted in each composite profile part 10,11,12. The pluglike members 25 thus confine an insulated space which is filled with adhesive 20. The profile part 10 is provided with an aperture 21 for injecting the adhesive 20. Through the injection aperture 21 is injected polyurethane adhesive, which bonds the profile parts 10,11,12 firmly together when it hardens. Holes 22,23 have been made to the profile parts 11 and 12 in the area which remains in the joint, i.e. in the portion which remains inside the profile part 10, which holes 22,23 facilitate the moving of the adhesive 20 and enlarge the bond surface thus strengthening further the joint.

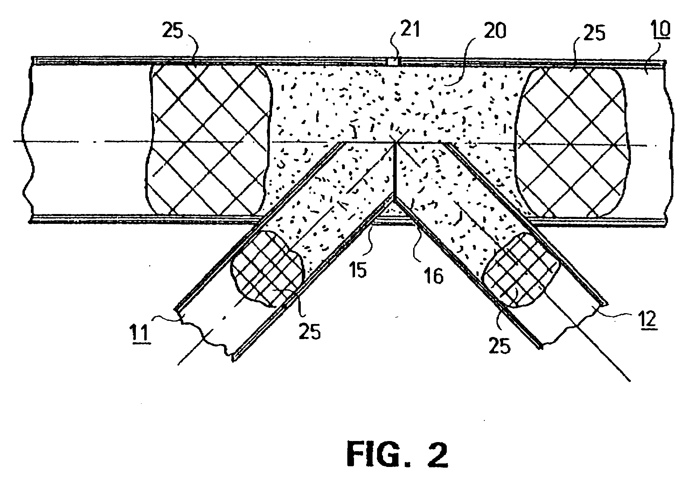

In the embodiment shown in Fig. 2 in the profile part 10 manufactured of a composite material the holes 15,16 have been formed in a similar manner for the composite profile parts 11,12 to be joined, and the joint space has been insulated by placing pluglike members 25 made of polyurethane foam in each profile part 10,11,12. The profile part 10 is provided with an injection or casting aperture 21, through which polyurethane, epoxy or equivalent adhesive is passed into the joint.

At least one of the plastic profile parts to be joined together shall be a hollow part, in which the pluglike members are placed adjacent to the joint area, and the other plastic profile parts to be placed in the joint area may be either hollow parts, in which case pluglike members are also placed in them for the insulated space to be formed in the joint area, or solid parts, in which case no pluglike members are required. If the joint has solid profile parts, their ends can be e.g. grooved, threaded or perforated, if required, in order to enlarge the bond area.

As will be seen from the figures, the bond surface becomes very large, thereby providing strong joint. It is very simple to make this kind of joint on site, and, in addition, the metering of the quantity adhesive can be controlled because of the provision of a separate space the size of which can be easily determined.

The profile parts 10,11,12 to be joined may be either of the same or of different plastic material. The profile parts to be joined to one another may be of any plastic that can be made into profiles, and at least one profile part to be joined shall be of such a plastic material which can be made into tubular profiles. For instance, PVC plastics, polystyrenes, polyolefins, polyesters, nylon are suitable for use as the profile material, and the material of the profile parts to be joined is preferably fibre-reinforced plastic, or reinforced plastic, i.e. a composite material. The fibres of the fibre-reinforced plastic can be inorganic, e.g. glass, carbon, ceramic, metal, or organic, e.g. nylon, kevlar, aramid, polyester, polyolefin.

Polyurethane adhesive, epoxy, phenolic resin or another equivalent adhesive can be used as adhesive. The adhesive can be a foamed adhesive. In addition, fibre-reinforced plastic, which is hardened in the joint, can be used as adhesive.

The plugs are made, for example, of flexible foamed plastic or of foamable polyurethane or of any other material compatible with the profile material and the adhesive used.

The position of the structures to the joined can be readily changed relative to one another, and the injection or casting aperture of the adhesive can be placed in a point suitable for the intended use, however, preferably so that the adhesive is evenly distributed into the entire joint space.

The invention has been described above only with reference to certain advantageous embodiments thereof. However, the invention is not intended to be narrowly confined to the details of the embodiments in any way. Numerous alterations and modifications are feasible within the scope of the inventive idea defined in the following claims.

## Claims

1. A method of glueing lattice structures manufactured of a plastic profile, in which method plastic profiles (10, 11, 12) to be glued to one another are placed in a joint for joining at least one plastic profile to at least one hollow plastic profile, characterized in that pluglike members (25) are placed in said hollow plastic profile (10, 11, 12) to confine a joint area so that an insulated space is formed, and that said insulated space is filled with adhesive.

2. A method according to Claim 1, characterized in that the space insulated by the pluglike members (25) is filled with adhesive by casting or by injection.

3. A method according to Claim 1 or Claim 2, characterized in that plugs made of a flexible foamed plastic piece of foamable polyurethane are used as pluglike members (25).

4. A method according to any one of claims 1 to 3, characterised in that a polyurethane adhesive or an epoxy adhesive is used as adhesive.

5. A method according to any one of the preceding claims, characterized in that at least one plastic profile (10) is hollow and provided with two pluglike members (25) and another plastic profile (11) is either a hollow plastic profile provided with one pluglike member (25) or a solid plastic profile which can be a threaded, grooved or perforated profile.

6. An adhesive bonding joint of lattice structures manufactured of a plastic profile, wherein the plastic profiles (10,11,12) to the glued to one another are placed in the joint for joining at least one plastic profile to at least one hollow plastic profile, characterized in that the joint is provided in the form of an insulated spaced confined by pluglike members (25) placed in said hollow plastic profile (10,11,12), which space has been filled with adhesive.

7. A joint according to Claim 6, characterised in that at least one plastic profile (10) is hollow and provided with two pluglike members (25) and at least one other plastic profile (11,12) is a hollow profile provided with one pluglike member (25).

8. A joint according to Claim 7, characterised in that in order to increase the bond area, openings (22,23) have been made to those portions of said other plastic profiles (11,12) which remain in the joint.

9. A joint according to Claim 6, characterized in that at least one plastic profile (10) is hollow and provided with two pluglike members (25) and at least one other plastic profile is a solid profile which has been optionally threaded, grooved or perforated to improve the bond.

10. A joint according to any one of Claims 6 to 9, characterised in that the pluglike members (25) are manufactured of flexible foamed plastic or of foamable polyurethane.

11. A joint according to any one of Claims 6 to 10 characterised in that the adhesive is a polyurethane adhesive or an epoxy adhesive.

12. An adhesive bonded joint of a lattice structure manufactured of plastic profiles, wherein at least one, optionally hollow, plastic profile (11,12) is bonded to a hollow plastic profile (10) with an end of the at least one plastic profile in a joint cavity in the hollow plastic profile, characterized in that the joint cavity takes the turn of a space defined by pluglike members (25) in the hollow plastic profile (10) and the at least one other plastic profile (if hollow); which space is filled with an adhesive.
